# EUROPÄISCHE PATENTANMELDUNG

(11) **EP 1 129 940 A1**
(43) Veröffentlichungstag der Anmeldung: **05.09.2001**
(21) Anmeldenummer: 00128464.5
(22) Anmeldetag: 23.12.2000
(51) Int. Cl.: B64D 13/00

(54) **Klimatisierungssystem für ein Verkehrsflugzeug**

(30) Priorität: 29.02.2000 DE 10009373
(71) Anmelder: EADS Airbus GmbH, 21129 Hamburg (DE)
(72) Erfinder: Buchholz, Uwe Albert, Dipl.-Ing., 21640 Bliedersdorf (DE); Kelnhofer, Jürgen, Dipl.Ing., 21635 Jork (DE); Scherer, Thomas, Dr.-Ing., 22559 Hamburg (DE)
(74) Vertreter: Hansmann, Dierk, Dipl.-Ing.

(57) **Zusammenfassung**

Mit der Erfindung wird ein Klimatisierungssystem eines Verkehrsflugzeuges, das im Kühlprozeß mit einer einstufigen Verdichtungs- (1) und Expansionsstufe (2) oder mit mehrstufigen verschiedentlich gestalteten Verdichtungs- (1,3) und Expansionsstufen (2,4) arbeitet, vorgeschlagen. Das Klimatisierungssystem weist differente Anordnungen von unterschiedlich luftstromverschaltenen Kompressoren und Turbinen auf, die auf einer oder auf verschiedenen Antriebswellen (21,22), die mechanisch angetrieben und drehbeweglich gelagert sind, wellenmechanisch fest angeordnet sind. Wenigstens ein Kompressor (1) und eine Turbine (2) sind seriell auf einer (der) Antriebswelle(n) angeordnet. Dabei ist auf wenigstens einer der verschiedenen Antriebswellen ein zusätzlicher Kompressor (23) installiert, dem eine abgehende Luftverbindungsleitung (20) angeschlossen ist. Durch letztere wird die kompressorabgeführte komprimierte Luft transportiert, welche redundant mit weiteren Kühlkompressoren oder mit redundanten Luftverbindungsleitungen weiterer Zwangsbelüftungen von wenigstens einem anderen Klimaaggregat verbunden ist oder anderenfalls einem ausgewählten Flugzeug-Rumpfbereich zur Zwangs(kühl)belüftung angeschlossen ist.

## Beschreibung

Die Erfindung bezieht sich auf ein Klimatisierungssystem für ein Verkehrsflugzeug gemäß dem Oberbegriff des Anspruches 1. Mit ihr wird die zuverlässige Luftversorgung der einem Luftverteilungsnetz angeschlossenen Kühlbereiche innerhalb einem Verkehrsflugzeug durch redundant bereitgestellte Luft gewährleistet.

In allen bekannten Flugzeugen mit integrierter Klimaanlage wird die notwendige Kühlenergie aus der hochverdichteten Triebwerksluft durch einen thermodynamischen Kompressions- und Expansionsprozeß mit Zwischenkühlung gewonnen. Zur Lufttrocknung sind unterschiedliche Kondensationsprozesse zwischengeschaltet. Es sind auch Kühlprozesse bekannt, in denen die Kompressions- und Expansionsprozesse zum Teil durch Hybridkühlungsprozesse ersetzt werden, um beispielsweise fehlende Druckenergie vom Triebwerk zu kompensieren. Diese Kompressions- und Expansionsprozesse können unterschiedlich verschaltet werden, wobei die Anzahl der drehenden Wellen für die mit ihnen wellenmechanisch verbundenen Turbomaschinen und die Anzahl der (ihnen installierten) Turbomaschinen variieren wird, welches zu differentem charakteristischen Verhalten führt. Hierbei muß auf einer drehenden Welle das Energiegleichgewicht aller energetisch beteiligten Einrichtungen [Turbomaschine(n), Kompressor(en), Gebläse] gewährleitet sein.

Ferner sind Prozesse bekannt, die mit einstufiger Verdichtung und einstufiger Expansion, mit einstufiger Verdichtung und zweistufiger Expansion sowie mit zweistufiger Verdichtung und zweistufiger Expansion im Kühlprozeß arbeiten, wofür (unter anderem) die Lösungen der Druckschriften: "US-A 5,086,622 und US-A 5,887,445" entsprechende Vorbilder bereitstellen. Diese bekannten Prozesse arbeiten mit differenten Anordnungen von Kompressoren und Turbinen auf unterschiedlichen Wellen mit den vorgenannten Verschaltungen. Dabei sind der Fachwelt nachfolgend angegebene Anordnungen von Kompressoren und Turbinen auf einer oder mehreren Wellen geläufig:

| | | | |
|---|---|---|---|
| a) | 1 Welle mit | 2 Kompressoren, | ohne Turbine(n); |
| b) | 1 Welle mit | 2 Kompressoren, | 2 Turbinen; |
| c) | 2 Wellen, davon: | | |
| | eine erste Welle mit | 1 Kompressor, | 1 Turbine; |
| | und eine zweite Welle mit | 1 Kompressor, | 1 Turbine; |
| d) | 2 Wellen, davon: | | |
| | eine erste Welle mit | 1 Kompressor, | 1 Turbine; |
| | und eine zweite Welle mit | 2 Kompressoren, | 1 Turbine. |

Hierbei wird immer auf ein Energiegleichgewicht pro Welle geachtet, wobei die Energieabgabe des Gesamtsystems durch die Verschaltung der Wellen und Turbomaschinen erreicht wird.

Dabei sind die Leit- und Drosselapparate, die Zwischenkühlungseinheit und die Kondensationsgruppe, die den Turbomaschinen zugeordnet sind, in Größe und Effizienz auf die abzugebende Gesamtenergiemenge abgestimmt. Allerdings sind die in diesen Kühleinheiten umgesetzten Leistungen mit Verlusten behaftet, die als Wärmeleistung und / oder Wärmestrahlung an die unmittelbare Umgebung abgegeben werden. Sind diese Kühleinheiten in Flugzeugräumen integriert, dann wird diese Verlustleistung an die Raumumgebung abgegeben, wodurch eine Temperaturerhöhung der Raumlufttemperalur dieser Räume und der umgebenden Flugzeugstruktur unvermeidlich wird.

In einigen Flugzeugen begegnet man diesem Umstand dadurch, indem ein Zwangsbelüftungssystem mit externer Energiequelle für eine Raumbelüftung installiert wird, damit man für eine angenehme temperaturverträgliche Raumkühlung sorgt. Als schaltbare Energiequelle wird ein Turbokompressor benutzt, der energiereiche Triebwerks-Zapfluft (Bleed Air) über eine Turbine in Wellenleistung wandelt, die an einen Kompressor geleitet wird, welcher den Klimaeinheiten über ein Luftverteilnetz entsprechende Außenluft(mengen) zuleitet und dort eine umgebende Zwangskühlung aufrecht erhält. Falls dieser Turbokompressor (durch irgendwelche Umstände) fehlerhaft ausfällt, ist die für die Einbauräume der Klimaeinheiten norwendige Zwangskühlung nicht vorhanden, weshalb zwangsläufig die Klimaein-heiten abgeschaltet werden müssen.

Demzufolge liegt der Erfindung die Aufgabe zugrunde, ein Klimatisierungssystem für ein Verkehrsflugzeug vorzuschlagen, mit dem die zuverlässige Luftversorgung der einem Luftverteilungsnetz angeschlossenen Kühlbereiche innerhalb dem Flugzeug durch redundant bereitgestellte Luft gewährleistet wird, und anderenfalls eine Zwangskühlung des Einbauraumes dieser Klimaeinheit durch deren Betrieb sichergestellt wird.

Diese Aufgabe wird durch die im Anspruch 1 angegebenen Maßnahmen gelöst.

Die Erfindung ist in einem Ausführungsbeispiel anhand der beigefügten Zeichnung näher beschrieben. Dazu zeigt die
- Fig. 1: das Blockschaltbild nach Fig. 2 mit einem auf einer Antriebswelle zusätzlich installierten Kompressor;
- Fig. 2: das Blockschaltbild eines Klimatisierungssystems für ein Verkehrsflugzeug.

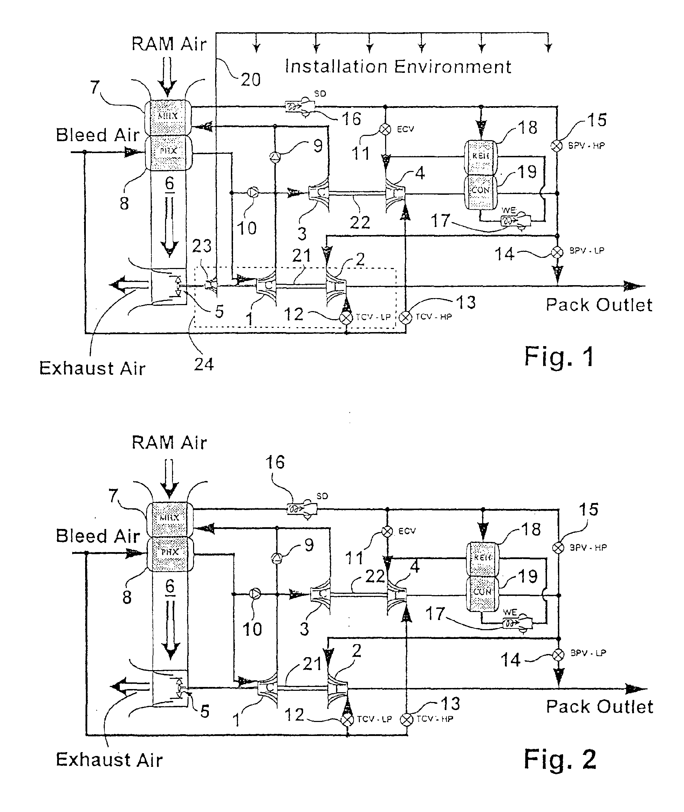

Mit einem Vorgriff auf die Fig. 2 werden (zum weiteren Verständnis) Erläuterungen hinsichtlich einem bekannten Klimatisierungssystems mit zweistufiger Verdichtung und Expansion im Kühlprozeß gegeben, das nachfolgend (als dem Anmelder bekannt) vorgestellt wird. Diesem Klimatisierungssystem sind zwei getrennte ACM (Air Cycle Maschinen) mit jeweils einem wellenmechanisch gekoppeltem Kompressor 1, 3 (Verdichter) und einer wellenmechanisch gekoppelten Turbine 2, 4 integriert, die (in Fachkreisen) auch als Zwei- oder Drei-Rad-Maschine bezeichnet werden. Bei der Drei-Rad-Maschine wird zusätzlich einem ersten Kompressor 1 und einer ersten Turbine 2, die beide auf einer gemeinsamen ersten Welle 21 angeordnet sind und mit letzterer wellenmechanisch gekoppelt sind, ein auf dieser Welle endseitig befestigtes Gebläse 5 (Fan) angeordnet, der bei der mit einem zweiten Kompressor 3 und einer zweiten Turbine 4 gleichermaßen aufgebauten Zwei-Rad-Maschine entfällt.

Nach dem im Blockschaltbild der Fig. 2 vorgestellten Klimatisierungssystem wird die ihm zugeführte Stauluft (RAM Air) über einen Hauptwärmetauscher 7 [Main Heat Exchanger (MHX)] und einen nachfolgend verbundenen Primärwärmetauscher 8 [Primary Heat Exchanger (PHX)] in einen Kühlluftschacht 6 geleitet, wobei das Gebläserad des Gebläses 5 (im Bodenfall eines Flugzeuges) die Stauluft antreibt, die über den Stauluftauslaß (Exhaust Air) an die Flugzeugumgebung abgeführt wird.

Außerdem wird die im Bodenfall [eines auf dem Boden (bspw. auf der Piste eines Flughafens) positionierten Flugzeuges] - und nur darauf beziehen sich die weiteren Ausführungen - von einem Hilfstriebwerk [Auxiliary Power Unit (APU)] oder den Triebwerken oder einem bodenseitigen Hochdruckverbinder (High Pressure Ground Connector), die (alle) figurlich nicht dargestellt werden, bezogene Zapfluft (Bleed Air) zunächst durch den Primärwärmetauscher 8 geführt und dort abgekühlt, wobei die abgekühlte Zapfluft danach dem ersten Kompressor 1, der dem Primärwärmetauscher 8 verbunden ist, zugeleitet und dort weiter verdichtet wird. Von dort aus wird die dermaßen verdichtete und dabei auf ein bestimmtes Temperaturniveau angehobene Zapfluft dem zweiten Kompressor 3 zugeleitet, welcher wellenmechanisch mit der zweitenTurbine 4 gekoppelt ist. Die dermaßen nochmals verdichtete und auf ein höheres Temperaturniveau angehobene Zapfluft wird außerdem dem Hauptwärmetauscher 7 zugeführt, wo sie wiederholt abgekühlt wird. Diese nunmehr einen bestimmten (hohen ) Druck aufweisende und auf eine bestimmte Temperatur abgekühlte Zapfluft wird darauffolgend über einen gesplitteten Rohrabschnitt 16 (Splitt Duct), der funktionell einem (vereinfachten) Wasserabscheider entspricht, geleitet, um eine ausreichende Entfeuchtung dieser Zapfluft umzusetzen.

Auf die in der Fig. 2 schaltungsmäßig mit angegebenen Luftmengen-Regelventile zur Regu-lierung der durch die Luftverbindungsleitungen strömenden Luftmenge (am installierten Einbauort) wird soweit verzichtet, weil damit das weitere Verständnis um die Zusammenhänge nicht gefährdet wird.

Davon betroffen sind (sogenannterweise) zwei Überlastventile 9, 10 [Control Valve (CV)], ein Einsparungsventil 11 [Economy Valve (ECV)], ein Niederdruck-Temperaturregelventil 12 [Low Pressure - Temperature Control Valve (TCV-LP)], ein Hochdruck-Temperaturregelventil 13 [High Pressure - Temperature Control Valve (TCV-HP)], ein Niederdruck-Bypassventil 14 [Low Pressure-Bypass Valve (BPV-LP)] und ein Hochdruck-Bypassventil 15 [High Pressure-Bypass Valve (BPV-HP)], deren Einbindung in den Schaltungsaufbau des vorgestellten Klimatisierungssystems auch unter dem Aspekt ihres Einsatzzweckes dem Fachmann mit einem Blick geläufig erscheinen wird.

Um nun ein Klimatisierungssystem für ein Verkehrsflugzeug umzusetzen, mit dem die zuverlässige Luftversorgung der einem Luftverteilungsnetz angeschlossenen Kühlbereiche innerhalb dem Flugzeug durch redundant bereitgestellte Luft gewährleistet wird, mit dem man anderenfalls eine Zwangskühlung von zu klimatisierenden (ausgewählten) Raumbereichen eines Flugzeugrumpfes bzw. des Einbauraumes der Klimaeinheite(n) durch den Betrieb dieser Klimaeinheit(en) selbst sicherstellt, wird wenigstens ein zusätzlicher dritter Kompressor 23, der nach dem Vorbild der Fig. 1 auf der ersten Welle 21 angeordnet und mit dieser wellenmechanisch gekoppelt ist, betrieben, der (nach der Fig. 2) zwischen dem Gebläse 5 und dem ersten Kompressor 1 platziert ist. Danach wird als Energiequelle für solch einen Kompressor 23 eine der zur Verfügung stehenden drehenden Wellen 21, 22, bspw. die erste Welle 21, benutzt. Da die ohne Gebläse 5 versehene Zwei-Rad-Maschine (Zwei-Rad-ACM) im betrachteten Bodenfall (des Flugzeuges) im ungünstigen Fall defekt werden kann, weil sie nur noch beschränkt funktioniert (drohende Gefahr ihres Ausfalls), oder sogar darauffolgend (zeitlich schon absehbar) vollständig wegen Defekt ausfällt oder anderenfalls bereits vollständig ausgefallen ist, wobei aber [trotz ihres (bevorstehenden) Ausfalls] ein weiteres Betreiben des funktionierenden Teiles des nehmlichen Klimatisierungssystems - nach wie vor - möglich sein wird, wird (aus Gründen) eine weiterhin (aufrechtzuerhaltende) Kühlung [der ausgewählten Raum- oder der Einbaubereich(e)] deshalb notwendig sein, um bspw. den Cockpitraum oder die Passagier- oder Frachtraumbereiche (eines parkenden Verkehrsflugzeuges) weiterhin mit ausreichend klimatisierter Luft zu versorgen. Alternativ kann der dritte Kompressor 23 auch auf der zweiten Welle 22 installiert sein, oder auf der ersten und der zweiten Welle 21, 22 ist ein jeweils zusätzlicher Kompressor 23 wellenmechanisch gekoppelt angeordnet. Letztere Maßnahme würde aus Gründen der Luft-Versorgungszuverlässigkeit - interessant sein, die bei einem Großraumflugzeug, das mehrere (soll heißen: das aus mehreren gleichartigen Klimatisierungssystemen, die dem vorgestellten Klimatisierungssystem entsprechen,) zu einem umfänglich erweiterten Klimasystem integriert werden, die (mit geeigneten Maßnahmen) luftstrom(kreis)mäßig verbunden sind, eine besondere Wichtigkeit besitzt. Deshalb wäre (allgemein) die Einrüstung eines dritten zusätzlichen Kompressors 23 auf den Wellen aller installierten ACM denkbar, deren Kompromiß man zuungunsten des (hier nicht näher diskutierten) wachsenden Gewichtsanteils eines dermaßen ausgerüsteten und betriebenen Verkehrsflugzeuges erkaufen würde. Zurückkommend auf die Ausführung nach der Fig. 2 wird demnach der zusätzliche dritte Kompressor 23 genügend Wellenleistung entnehmen, um die notwendige Außenluft für bspw. die (vorgenannte) Raum- bzw. Bereichsbelüftung (Zwangsbelüftung) redundant bereitzustellen. Durch diesen Leistungsentzug sind alle auf der (betreffenden) Welle zugeordneten Turbomaschinen, sowie alle diesen zugeordneten Turbomaschinen zugeschalteten anderen Komponenten (Turbomaschinen, Zwischenkühlungseinheit, Kondensationsgruppe) energietechnisch neu abzustimmen, um die angestrebte Gesamtenergieabgabe weiterhin aufrecht zu erhalten. Diese maßnahmengerechte Umsetzung bedeutet auf den Einsatzfall bezogen, daß die notwendigen Leit- und Drosselgeräte der Turbomaschinen sowie die (räumliche) Größe der Geräte der Zwischenkühleinheit und der Kondensationsgruppe anders zu dimensionieren sind, als dies mit dem bekannten Stand der Technik (einschließlich der nach Fig. 2 vorgestellten Lösung) bereitgestellt wird.

Durch die Integration von (mindestens einem) zusätzlichen (dritten) Belüftungskompressors wird eine Verschiebung der Energiebilanzen in den zugehörigen Zustandsprozessen stattfinden. Die Anordnungen sehen dann - für zwei Wellen - wie folgt (angegeben) aus:

| | | | |
|---|---|---|---|
| e) | 1 erste Welle mit | 3 Kompressoren, | 1 Turbine; |
| | und 1 zweite Welle mit | ohne Kompressor(en) | und ohne Turbine(n); |
| f) | 1 erste Welle mit | 3 Kompressoren, | 2 Turbinen; |
| | und 1 zweite Welle mit | ohne Kompressor(en) | und ohne Turbine(n); |
| g) | eine erste Welle mit | 2 Kompressoren, | 1 Turbine; |
| | und eine zweite Welle mit | 1 Kompressor, | 1 Turbine; |
| h) | eine erste Welle mit | 3 Kompressoren, | 1 Turbine; |
| | und eine zweite Welle mit | 1 Kompressor, | 1 Turbine; |
| j) | eine erste Welle mit | 1 Kompressor, | 1 Turbine; |
| | und eine zweite Welle mit | 2 Kompressoren, | 1 Turbine; |
| k) | eine erste Welle mit | 1 Kompressor, | 1 Turbine; |
| | und eine zweite Welle mit | 3 Kompressoren, | 1 Turbine. |

Durch diese Kompressorintegration wird sicher gestellt, daß automatisch beim Einschalten der (betreffenden) Klimatisierungseinheit der zugehörige Raum- bzw. Bereich respektive Einbauraum der Klimatisierungseinheit redundant zwangsgekühlt wird. Wird weiterführend das nachgeschaltete Luftverteilernetz mehrerer zugeordneter Kühleinheiten miteinander verbunden, kann durch die Realisierung der vorgestellten Maßnahme der Ausfall eines (ersten oder zweiten) Kompressors 1, 3 kompensiert werden.

Diese Maßnahme - mit der Integration von mindestens einem zusätzlichen Kompressor 23 auf der einzelnen Welle oder auf mehreren Wellen bereits existierender Kühleinheiten versteht sich bei vorhandenen (einem Verkehrsflugzeug eingerüsteten) ACM als (elegante) Nachrüstlösung, sofern der Platzbedarf ausreicht, dabei mit der einhergehenden Verschiebung der Wellenenergiebilanz der betroffenen Welle(n) sowie der einhergehenden Verschiebung der Energiebilanz im Gesamtsystem Kühleinheit und zugehöriger Turbomaschinengrößen, Zwischenkühleinheitgröße und Kondensationsgruppengröße die Abstimmung von entsprechenden Maßnahmen zur Gewährleistung der angestrebten Gesamtenergieabgabe neu vorzusehen sind.

## Patentansprüche

1. Klimatisierungssystem eines Verkehrsflugzeuges, das im Kühlprozeß mit einer einstufigen Verdichtungs- und Expansionsstufe oder mit mehrstufigen verschiedentlich gestalteten Verdichtungs- und Expansionsstufen arbeitet, bestehend aus differenten Anordnungen von unterschiedlich luftstromverschaltenen Kompressoren (1, 3) und Turbinen (2, 4), die auf einer oder auf verschiedenen Antriebswellen (21, 22), die mechanisch angetrieben und drehbeweglich gelagert sind, wellenmechanisch fest angeordnet sind, wobei wenigstens ein Kompressor (1, 3) und eine Turbine (2, 4) auf einer Antriebswelle (21, 22) seriell angeordnet sind,
**dadurch gekennzeichnet**, **daß** auf wenigstens einer der verschiedenen Antriebswellen (21, 22) ein zusätzlicher Kompressor (23) angeordnet ist, dem eine abgehende Luftverbindungsleitung angeschlossen ist, durch die die kompressorabgeführte komprimierte Luft transportiert wird.

2. Klimatisierungssystem nach Anspruch 1, **dadurch gekennzeichnet, daß** der zusätzliche Kompressor (23) auf jeder der verschiedenen Antriebswellen (21, 22), die Bestandteil von mehrstufig gestalteten Verdichtungs- und Expansionsstufen sind, angeordnet ist.

3. Klimatisierungssystem nach den Ansprüchen 1 und 2, **dadurch gekennzeichnet, daß** der zusätzliche Kompressor (23) auf einer ersten Antriebswelle (21) oder auf einer zweiten Antriebswelle (22) oder auf diesen beiden Antriebswellen (21, 22) von bereits existierenden Kühleinheiten, die Bestandteil von mehrstufig gestalteten Verdichtungs- und Expansionsstufen sind, angeordnet ist.

4. Klimatisierungssystem nach einem der Ansprüche 1 bis 3, **dadurch gekennzeichnet, daß** der zusätzliche Kompressor (23) entweder zwischen einem ersten Kompressor (1) und einer ersten Turbine (2) oder dem Gebläse (5) und dem ersten Kompressor (1) auf der ersten Antriebswelle (21) angeordnet ist, anderenfalls der zusätzliche Kompressor (23) neben der ersten Turbine (2) auf einem unbesetzten Wellenbereich der ersten Antriebswelle (21) angeordnet ist.

5. Klimatisierungssystem nach einem der Ansprüche 1 bis 3, **dadurch gekennzeichnet, daß** der zusätzliche Kompressor (23) entweder zwischen einem zweiten Kompressor (3) und einer zweiten Turbine (4) auf der zweiten Antriebswelle (22) angeordnet ist, anderenfalls der zusätzliche Kompressor (23) neben dem zweiten Kompressor (3) oder der zweiten Turbine (4) auf einem unbesetzten Wellenbereich der zweiten Antriebswelle (22) angeordnet ist.

6. Klimatisierungssystem nach den Ansprüchen 4 oder 5, **dadurch gekennzeichnet, daß** der auf der einzelnen Antriebswelle (21, 22) mit dem ersten Kompressor (1) und der ersten Turbine (2) oder mit dem zweiten Kompressor (3) und der zweiten Turbine (4) integrierte zusätzliche Kompressor (23) eine Ventilations-Kompressor-Einheit (24) bildet, mit der eine einheitliche ACM realisiert ist.

7. Klimatisierungssystem nach Anspruch 1, **dadurch gekennzeichnet, daß** der abgehenden Verbindungsleitung mehreren Luftverbindungsleitungen angeschlossen sind, die redundant mit weiteren Kühlkompressoren oder redundant mit weiterern Zwangsbelüftungen von wenigstens einem anderen Klimaaggregat verbunden sind oder redundant einem ausgewählten Flugzeug-Rumpfbereich zur Zwangs(kühl)belüftung angeschlossen sind.

8. Klimatisierungssystem nach Anspruch 1, **dadurch gekennzeichnet, daß** der abgehenden Luftverbindungsleitung mehreren Luftverbindungsleitungen angeschlossen sind, die verschiedenen Flugzeug-Rumpfbereichen zur Zwangs(kühl)belüftung verbunden sind, über die die verschiedenen Flugzeug-Rumpfbereiche redundant mit kompressorabgeführter komprimierter Luft versorgt werden.
